# EUROPEAN PATENT APPLICATION

(11) **EP 4 365 731 A1**
(43) Date of publication of application: **08.05.2024**
(21) Application number: 21951396.7
(22) Date of filing: 30.07.2021
(51) Int. Cl.: G06F 8/60, G06N 5/04, G06N 5/02, G06N 20/00

(54) **DEVICE DEPLOYMENT METHOD FOR AI MODEL, SYSTEM, AND STORAGE MEDIUM**

(71) Applicant: Siemens Aktiengesellschaft, 80333 München (DE)
(72) Inventor: ZHANG, Hongyang, Shanghai 200065 (CN); ZHOU, Guanxing, Shanghai 201114 (CN); TANG, Bingchao, Shanghai 200136 (CN)
(74) Representative: Isarpatent
(86) International application number: PCT/CN2021/109878
(87) International publication number: WO 2023/004806

(57) **Abstract**

Disclosed in embodiments of the present invention are a device deployment method for an AI model, a system, and a storage medium. The method comprises: receiving a current behavior tree constructed and configured by a user on the basis of preset nodes for constructing various behavior trees, the nodes comprising a starting node, a control node, and an action node, wherein a behavior tree is used for representing a workflow, the control node is used for implementing logic control in the workflow, the action node is used for implementing a service operation in the workflow, and the action node comprises: a reusable independent action node formed by encapsulating the related service operation in an AI model deployment process; and performing the workflow corresponding to the current behavior tree, constructing a predetermined current AI model as an AI application and deploying same to a target device specified by the user. The technical solution in the embodiments of the present invention can reduce the complexity of AI model deployment.

## Description

### Technical Field

The present invention relates to the field of industrial automation, and in particular to a device deployment method for an artificial intelligence (AI) model, a system, and a computer-readable storage medium.

### Background Art

Artificial intelligence (AI) is widely applicable in industrial fields such as computer vision, robotics, and predictive maintenance. IT and automation companies are attempting to introduce AI into industrial automation systems.

In this process, a trained AI model needs to be deployed to a specific device. Common deployment operations typically include model format conversion, inference application construction, device configuration, and communication configuration. In an AI model deployment process, workflows often differ so significantly for different devices or AI application types that they are difficult to reuse. In addition, each step of a workflow usually requires operations in different scenarios, which makes the execution and management process of the workflow more complex. Therefore, in the field of industrial automation, AI application development and deployment processes are complex and diverse, and lack interoperability, so it is difficult to integrate AI into industrial automation systems.

### Summary of the Invention

In view of this, embodiments of the present invention propose a device deployment method for an AI model in one aspect, and a device deployment system for an AI model as well as a computer-readable storage medium in another aspect, to reduce the complexity of the device deployment for an AI model.

Proposed in an embodiment of the present invention is a device deployment method for an AI model, comprising: receiving a current behavior tree constructed and configured by a user based on preset nodes for constructing various behavior trees, the nodes comprising a start node, a control node, and an action node, wherein a behavior tree is used for representing a workflow, the control node is used for implementing logic control in the workflow, the action node is used for implementing a service operation in the workflow, and the action node comprises: a reusable independent action node formed by encapsulating the related service operation in an AI model deployment process; performing the workflow corresponding to the current behavior tree, constructing a predetermined current AI model as an AI application and deploying same to a target device specified by the user.

In one embodiment, the current behavior tree is a behavior tree constructed by a user by adding, connecting, and configuring a start node, required control nodes, and required action nodes; or it is a behavior tree obtained by selecting the corresponding fixed behavior tree template from a task template library according to the required AI application type or target device type to be deployed, and performing a first configuration and adjustment or nonadjustment based on the fixed behavior tree template; the first configuration comprises determining the current AI model and the target device to which it needs to be deployed; or it is a behavior tree obtained by selecting an intelligent behavior tree template based on automatic machine learning from a task template library, and performing a second configuration based on the intelligent behavior tree template; the second configuration comprises determining the AI application type and the target device to be deployed, and automatically determining, with the intelligent behavior tree template, an appropriate AI model from an AI model library according to the AI application type.

In one embodiment, it further comprises constructing the current behavior tree based on the syntax of a knowledge graph into a knowledge graph instance for storage; the knowledge graph instance comprises nodes representing individual nodes in the behavior tree, and a plurality of sides representing relationships among the nodes or node properties.

In one embodiment, it further comprises, when a user constructs the current behavior tree, recommending control nodes and/or action nodes, performing error checks, and intelligently mapping node properties for the user based on stored historical knowledge graph instances.

In one embodiment, each node consists of an interface part and an implementation part; for the implementation part, each node is a containerized application; for the interface part, each node is a graphical element that may be dragged and dropped and connected, and whose properties may be configured on a human-machine interaction interface; when each node in the current behavior tree is executed, the input in the property configuration of the interface part of the node will be read and transmitted to the implementation part of the node, and, after completion of the corresponding operation in the implementation part, the operation result will be converted into the output in the property configuration of the interface part of the node.

In one embodiment, it further comprises converting each node added to the current behavior tree into a node instance and adding same to a node instance list for storage or viewing, the node instance list presenting all the nodes in the current behavior tree in the form of a list or tree.

In one embodiment, the action nodes in the current behavior tree comprise the following action nodes executed in sequence: model importer, model trainer, and application deployer, or comprise the following action nodes executed in sequence: model importer, model trainer, model converter, and application deployer, or comprise the following action nodes executed in sequence: model adapter, model trainer, and application deployer, wherein the model importer is used for importing a trained AI model from a model storage area; the model trainer is used for retraining an imported training model with a new data source or training parameter; the model converter is used for converting a trained model from a source format to a target format; the model adapter is used for, based on automatic machine learning, automatically selecting a suitable AI model from a model library according to the currently determined AI application type; the application deployer is used for packaging an AI model into an AI application and deploying same to a specified target device.

Proposed in embodiments of the present invention is a device deployment system for an AI model, comprising a node storage module provided with nodes for constructing various behavior trees, the nodes comprising a start node, a control node, and an action node, wherein a behavior tree is used for representing a workflow, the control node is used for implementing logic control in the workflow, the action node is used for implementing a service operation in the workflow, and the action node comprises: a reusable independent action node formed by encapsulating the related service operation in an AI model deployment process; an engineering editing module for providing a human-machine interaction interface for a user to construct and configure a behavior tree based on the nodes in the node storage module, and for, according to the construction and configuration operations by the user, generating a current behavior tree for deploying the current AI model; and a behavior tree engine for performing the workflow corresponding to the current behavior tree, constructing the current AI model as an AI application and deploying same to a target device specified by the user.

In one embodiment, it further comprises a knowledge graph module for constructing the current behavior tree based on the syntax of a knowledge graph into a knowledge graph instance for storage; the knowledge graph instance comprises nodes representing individual nodes in the behavior tree, and a plurality of sides representing relationships among the nodes or node properties.

In one embodiment, the knowledge graph module is further used for, when a user constructs the current behavior tree, recommending control nodes and/or action nodes, performing error checks, and intelligently mapping node properties for the user based on stored historical knowledge graph instances.

In one embodiment, it further comprises a task template library for storing at least one behavior tree template that is constructed based on nodes in the node storage module; said at least one behavior tree template comprises at least one fixed behavior tree template corresponding to different AI application types or device types and/or a universal intelligent behavior tree template based on automatic machine learning; the engineering editing module is further used for, in response to a query request made by a user for the task template library through the human-machine interaction interface, providing at least one behavior tree template to the user for selection; and, when determining that the user selects a fixed behavior tree template for an AI application type or a target device type, generating the current behavior tree according to the user's first configuration and adjustment or nonadjustment of the fixed behavior tree template; the first configuration comprises determining the current AI model and the target device to which it needs to be deployed; when determining that the user selects the intelligent behavior tree template, generating the current behavior tree according to the user's second configuration of the fixed behavior tree template; the second configuration comprises determining the current AI application type and the target device to be deployed; the intelligent behavior tree template can automatically select a suitable current AI model from an AI model library according to the AI application type configured by the user.

In one embodiment, each node comprises an interface part and an implementation part; for the implementation part, each node is a containerized application; for the interface part, each node is a graphical element that may be dragged and dropped and connected, and whose properties may be configured on the human-machine interaction interface of the engineering editing module; when the behavior tree engine executes each node in the current behavior tree, the input in the property configuration of the interface part of the node will be read and transmitted to the implementation part of the node, and, after completion of the corresponding operation in the implementation part, the operation result will be converted into the output in the property configuration of the interface part of the node; the node storage module comprises an interface storage library and a node service module, wherein the interface storage library is used for storing the interface parts of each node; and the node service module is used for storing the implementation parts of each node.

In one embodiment, the engineering editing module comprises a behavior tree editor for providing human-machine interaction for a user to construct and edit the composition and connection relationships of the current behavior tree; a node configurator for providing human-machine interaction for a user to configure the properties of each node; a variable configurator for providing human-machine interaction for a user to configure a global variable; a node instance list module for converting each node added to the current behavior tree into a node instance and adding same to a node instance list for storage or viewing, the node instance list presenting all the nodes in the current behavior tree in the form of a list or tree.

Proposed in an embodiment of the present invention is a device deployment system for another AI model, comprising at least one memory and at least one processor, wherein said at least one memory is used for storing a computer program; said at least one processor is used for calling a computer program stored in said at least one memory to execute a device deployment method for an AI model as described in any of the preceding implementations.

Proposed in an embodiment of the present invention is a computer-readable storage medium, on which a computer program is stored; the computer program is executable by a processor to implement a device deployment method for an AI model as described in any of the preceding implementations.

It is thus clear from the above-described solution that in an embodiment of the present invention, the deployment operation process of an AI model is represented by a behavior tree graph, which means that related operations in an AI model deployment process are encapsulated into independent nodes to make the nodes reusable and decouple specific services from the engineering platform, and then nodes are organized in the form of a behavior tree to generate an intuitive AI application operation process from development to actual deployment, thus reducing the device deployment complexity of an AI model.

In addition, various behavior tree instances are represented and saved in the form of knowledge graphs, and, on the basis thereof, recommendation functions for nodes, properties, or workflows are implemented, thus further reducing the device deployment complexity of an AI model.

Further, by setting behavior tree templates for various AI application types and behavior tree templates integrated with automatic machine learning in a template task library, users can select, instead of creating from scratch, behavior trees corresponding to their tasks, greatly reducing the device deployment complexity of AI models.

### Brief Description of the Drawings

Preferred embodiments of the present invention will be described in detail below by referring to the drawings, allowing those of ordinary skill in the art to have a clearer understanding of the above-described and other features and advantages of the present invention, and in the drawings:
Fig. 1A and Fig. 1B are exemplary flowcharts of a device deployment method for an AI application in an embodiment of the present invention, respectively.
Fig. 2 is a schematic diagram of a behavior tree in an example of the present invention.
Fig. 3A and Fig. 3B are schematic diagrams of a node instance list in an example of the present invention, respectively.
Fig. 4 is a schematic diagram of a global variable in an example of the present invention.
Fig. 5 is a schematic diagram of node recommendation when a user constructs a behavior tree in an example of the present invention.
Fig. 6 is a schematic diagram of the definitions and hierarchical relationships of classes in a knowledge graph in an embodiment of the present invention.
Fig. 7 is a schematic diagram of the object properties and data properties in a knowledge graph in an embodiment of the present invention.
Fig. 8 is a schematic diagram of a knowledge graph instance in an example of the present invention.
Fig. 9 is an exemplary flowchart of a device deployment system for an AI application in an embodiment of the present invention.
Fig. 10 is an exemplary flowchart of a device deployment system for another AI application in an embodiment of the present invention.

The meanings of the reference signs are as follows:

| Reference sign | Meaning |
|---|---|
| 101 - 104 | Step |
| 10 | AI model library |
| 20 | Dataset library |
| 30 | Knowledge graph library |
| 910 | Node storage module |
| 911 | Interface storage library |
| 912 | Node service module |
| 920 | Engineering editing module |
| 921 | Behavior tree editor |
| 922 | Node configurator |
| 923 | Variable configurator |
| 924 | Data blackboard |
| 925 | Run/debug monitor |
| 930 | Behavior tree engine |
| 931 | Behavior tree executor |
| 932 | Status monitor |
| 933 | Error handler |
| 940 | Knowledge graph module |
| 950 | Task template library |
| 1001 | Memory |
| 1002 | Processor |
| 1003 | Display |
| 1004 | Bus |

### Specific Embodiments

In embodiments of the present invention, it is considered that (1) in a currently popular AI framework, for example, TensorFlow, PyTorch, or scikit-learn, the main focus is directed toward algorithms, training, and inference of AI models, and trained models are saved in some file formats. However, no intuitive and easy-to-use workflow editor is available for solving deployment problems. Taking TensorFlow as an example, a trained model may be saved as a frozen pb model, a saved model, or a meta graph model. To deploy a model to a specific device, users need to develop an AI application consisting of modules for data collection, data preprocessing, inference, data post-processing, and result sending. Usually, applications are written in programming languages such as Python and C++. Users also need to manually install all dependencies into the device, such as installing TensorFlow as the inference engine. To establish communication with other industrial devices, users need to integrate a communication module into an application. Since the entire process comprises code-based development and command-based operations, when the target device or application type has changed, the entire process needs to be restarted, which makes reuse and management difficult. (2) Kubeflow is a machine learning toolbox for Kubernetes, suitable for deploying a machine learning system to various environments for development, testing, and production-level services. However, using Kubeflow in industrial scenarios has some limitations. Firstly, since Kubeflow is based on Kubernetes, the target device has to support Kubernetes and users have to be familiar with Kubernetes. Kubernetes has a complex operating principle, requiring more professional knowledge in other conceptual aspects. This imposes many limitations on the deployment of an AI application in the industrial field, especially for automation engineers. Secondly, before creating a workflow by using a Kubeflow pipeline, a user needs to create all the components by using domain-specific languages, and then create the workflow by configuring the input and output of the components, which is not user-friendly for end users who are not familiar with it. (3) An automation company provides a dedicated inference device and the corresponding deployment software. Since AI application types vary, different templates are provided in the software. Users use these templates to configure and deploy applications. For users, this has a number of limitations, including insufficiency of flexibility, lack of interoperability, and inconsistency in user experience across different templates. For software suppliers, there are also many limitations, including long development cycles and difficulty in reuse.

Therefore, in order to provide a simple and easy-to-use device deployment solution for an AI model, an embodiment of the present invention considers providing a device deployment solution for an AI model based on a behavior tree. The basic idea behind it is to represent an AI model deployment process by a behavior tree graph. In other words, related operations in the AI model deployment process, such as data preprocessing, data post-processing, AI model retraining, AI model format conversion, device configuration, and communication, are encapsulated into independent nodes to make the nodes reusable and decouple specific services from the engineering platform. Then, nodes are organized in the form of a behavior tree to generate an intuitive AI application operation process from development to deployment. In addition, knowledge graphs are used to represent and save various behavior tree instances, and on the basis thereof, recommendation functions for nodes, properties, or workflows are implemented. Further, automatic machine learning may be integrated into a template task library, allowing users to select workflows corresponding to their tasks, instead of creating workflows from scratch.

To make clearer the objectives, technical solutions, and benefits of the present invention, the present invention will be described in greater detail below by referring to embodiments.

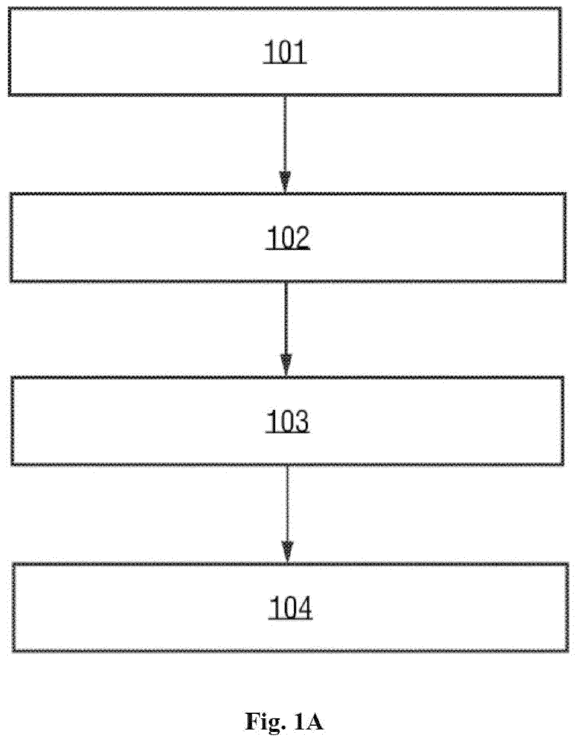

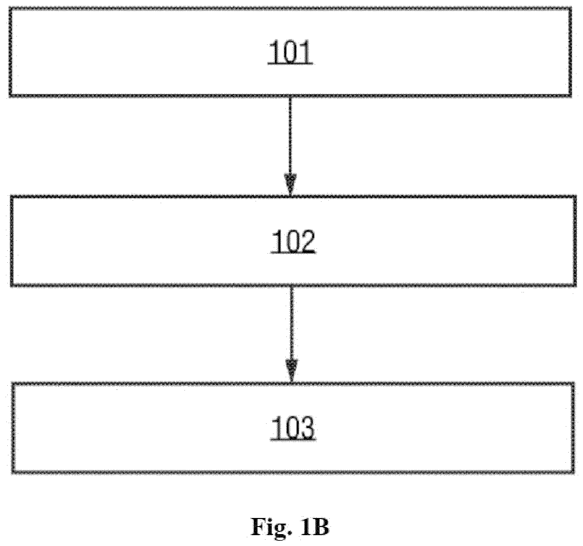

Fig. 1A and Fig. 1B are exemplary flowcharts of a device deployment method for an AI application in an embodiment of the present invention, respectively. As shown in Fig. 1A, the method may comprise the following steps:
Step 101, setting nodes for constructing various behavior trees. The nodes may comprise a start node, a control node, and an action node. A behavior tree is used for representing a workflow.

A start node is the root node of a behavior tree, and there is only one start node in a behavior tree.

A control node defines how to execute a branch in the tree or whether to execute a branch, to implement logic control, such as sequence, parallel, selector, loop, and count, in the workflow. A control node is independent of a specific service of an AI application. Control nodes allow users to create various workflows according to their own needs.

Action nodes are leaf nodes of a tree, used for implementing service operations in the workflow, and an action node has no output connections. The action node comprises a reusable independent action node formed by encapsulating the related service operation in an AI model deployment process. Through action nodes, encapsulated work is reusable in different workflows.

Some exemplary action nodes are as follows:
(1) Data collection nodes, which may include:
   File readers, for reading data from files in formats such as CSV and TDMS.
   Database connectors, which support connection to commonly used databases, such as MS SQL and MongoDB databases.
   OPC-UA clients, for retrieving data from OPC-UA servers commonly used in the field of automation.
(2) Data processing nodes, which may include:
   Data cleaners, for formatting source data to remove abnormal data, duplicate data, etc.
   Data converters, for converting source data from a source format to a target format.
   Data enhancers, for performing spatial transformations, color transformations, and other processing on data to expand a dataset.
(3) Model management nodes, which may include:
   Model importers, which are nodes for importing trained models from model storage areas such as model libraries or local PCs.
   Model trainers, for retraining imported trained models with new data sources or training parameters.
   Model converters, for converting trained models from a source format to a target format, for example, freezing pb (.pb) from TensorFlow to ONNX (.ONNX).
   Model adapters, used for automated feature extraction, model selection, parameter optimization, and other model adaptation processes according to the currently determined AI application type based on automatic machine learning, thereby automatically selecting a suitable AI model from a model library.
(4) Deployment kits
   Application deployers, for packaging AI models and peripheral programs thereof into AI applications and then deploying same to specified devices.

In this embodiment, each node may consist of an interface part and an implementation part. For the implementation part, each node is a containerized application comprising functional code and runtime dependencies. A containerized application can run independently and be made open to the public through a specific network communication interface, for example, a RESTful API or a remote procedure call (RPC) interface. For the interface part, each node is a graphical element that may be dragged and dropped in a workflow editor, and each node has a property panel for configuring nodes such as input and output.

Each node may be configured and executed separately. When a node is executed, the input configured by a user in the interface part of the node will be read and converted to the corresponding containerized application. After completion of specific AI operations such as model transformation, operation results, such as the transformed model, will be converted back to the output of the interface part of the node.

In a specific implementation, the nodes may be stored in a node storage module, and the interface parts and implementation parts of each node may be stored separately. For example, the interface parts may be stored in an interface storage module, and the implementation parts may be stored in a node service module.

Step 102, receiving a current behavior tree constructed and configured by a user based on the node for deploying the current AI model.

In this embodiment, a graphical human-machine interaction interface may be provided, comprising a behavior tree editing interface, a node configuration interface, a variable configuration interface, a node instance list interface, and a running result feedback interface.

The behavior tree editing interface is used for providing human-machine interaction for a user to construct and edit the composition and connection relationships of the current behavior tree.

The node configuration interface is used for providing human-machine interaction for a user to configure the properties of each node.

The variable configuration interface is used for providing human-machine interaction for a user to configure global variables.

The node instance list interface is used for converting each node added to the current behavior tree into a node instance and adding same to a node instance list for storage, viewing, or modification, the node instance list presenting all the nodes in the current behavior tree in the form of a list or tree.

The running result feedback interface is used for presenting intermediate and final execution results of the current behavior tree.

Correspondingly, the current behavior tree may be obtained by a user by adding and connecting the required nodes, including the start node, the required control nodes, and the required action nodes, on the behavior tree editing interface, and configuring node properties through the node configuration interface. In practical application, the node configuration interface may be displayed by clicking the corresponding node or sliding and hovering over the corresponding node in the behavior tree editing interface. In addition, when global variables are needed, they may be further configured.

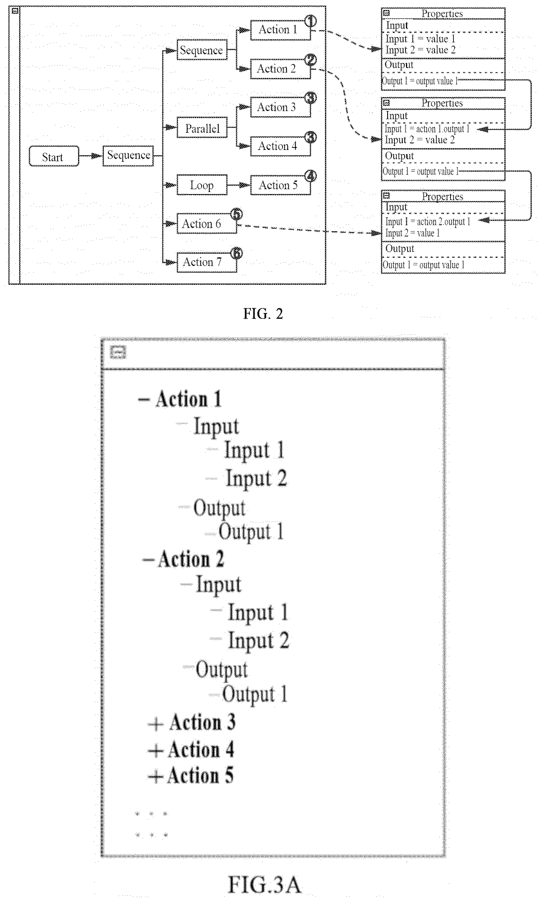

Fig. 2 is a schematic diagram of a behavior tree in an example of the present invention. The behavior tree is constructed by adding and connecting a series of nodes with specific functions, and, as shown in Fig. 2, the behavior tree comprises a start node located on the far left; a first sequence node located to the right of the start node and connected thereto; a second sequence node, a parallel node, a loop node, a sixth action node (hereinafter referred to as action 6), and a seventh action node (hereinafter referred to as action 7) that are located to the right of the first sequence node and connected thereto; a first action node (hereinafter referred to as action 1) and a second action node (hereinafter referred to as action 2) that are located to the right of the second sequence node and connected thereto; a third action node (hereinafter referred to as action 3) and a fourth action node (hereinafter referred to as action 4) that are located to the right of the parallel node and connected thereto; a fifth action node (hereinafter referred to as action 5) located to the right of the loop node and connected thereto. The property configuration of the first action node is configured with two input values: input 1 = value 1, input 2 = value 2, and one output value: output 1 = output value 1, and this output value 1 has a mapping relationship with an input value of the second action node, which means that input 1 of the second action node = action 1.output value 1. In addition, the second action node further has another input value: input 2 = value 2, and one output value: output 1 = output value 1, and this output value 1 has a mapping relationship with an input value of the third action node, which means that input 1 of the third action node = action 2.output value 1. In addition, the third action node further has another input value: input 2 = value 1, and one output value: output 1 = output value 1.

The general execution logic in embodiments of the present invention is from left to right and from top to bottom, and specific execution logic is controlled by a control node. In Fig. 2, there are some numbers in the upper right corner of the action node that represent the execution sequence, which means that the execution sequence is sequential execution of action 1 and action 2, followed by parallel execution of action 3 and action 4, loop execution of action 5, and then sequential execution of action 6 and action 7.

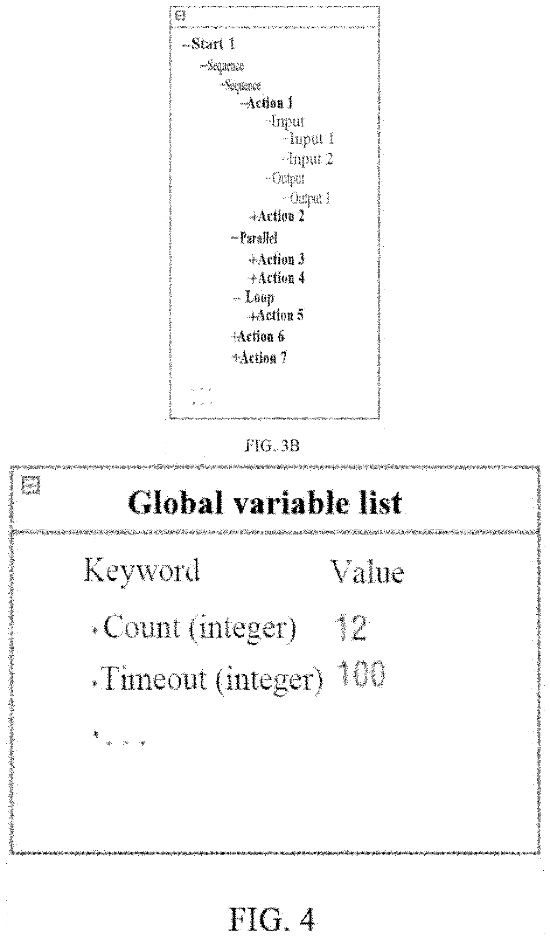

For the behavior tree shown in Fig. 2, the node instance lists as shown in Fig. 3A and Fig. 3B may be obtained. They are displayed in the form of a list in Fig. 3A and in the form of a tree in Fig. 3B. Correspondingly, global variables may also be configured as shown in Fig. 4.

In addition, to make it convenient for a user to construct a behavior tree, save time, and minimize operational difficulty, in this embodiment, a task template library may be set up, which may store at least one fixed behavior tree template for different device types or AI application types. For example, device types may include edge device, Industrial Personal Computer (IPC) device, AI computing stick, or AI computing module. AI application types may include object detection, object classification, and time series. In specific application, a user may, according to the target device type or AI application type, determine the fixed behavior tree template to be selected, and, after selecting a fixed behavior tree template, may use it directly or modify it using a node in a node storage module, especially an interface storage library, before completing the corresponding configuration to generate the current behavior tree. Specific configurations may include configuring a dataset for retraining the AI model and selecting the required current AI model. In addition, configuration of node properties, global or local variables, etc. may also be included. Specific configuration may be determined according to actual needs, which is not limited herein.

Alternatively, a universal intelligent behavior tree template based on automatic machine learning may also be stored in the task template library. Take, for example, an AotoML-based intelligent behavior tree template. After selecting the intelligent behavior tree template, a user may generate the current behavior tree by completing simple configuration. Specific configurations may include configuring a dataset for retraining the AI model and configuring the required AI application type, so that the intelligent behavior tree template can automatically determine the appropriate current AI model. In addition, configuration of node properties, global or local variables, etc. may also be included. Specific configuration may be determined according to actual needs, which is not limited herein.

In this embodiment, a behavior tree template in the task template library may be configured in advance, or the current behavior tree is stored as the corresponding behavior tree template according to a user instruction, in which case the behavior tree template comprises only all the nodes in the current behavior tree and their relationships, and its configuration data may not be stored.

In this embodiment, in order to achieve device deployment of an AI model, an action node named application deployer should be added to the current behavior tree, and the target device should be configured in the configuration panel of the application deployer node. In addition, a model importer and a model trainer may be added before the application deployer, and, if format conversion is required for the AI model, then a model converter may be added between the model trainer and the application deployer. Alternatively, in another implementation, a model adapter and a model trainer may be added before the application deployer, and the model adapter automatically selects a suitable AI model for training.

Step 103, according to the execution logic of the current behavior tree, performing the workflow corresponding to the current behavior tree, constructing the predetermined current AI model as an AI application and deploying same to the target device specified by the user.

Then, the deployed AI application may be used to monitor the operational status of the device.

As shown earlier, when a node is executed, the input configured by a user in the interface part of the node will be read and converted to the implementation part of the node. After completion of specific operations in the implementation part, operation results will be converted back to the output of the interface part of the node.

In specific implementation, intermediate and final results obtained in the execution process may be displayed. In addition, if it is uncertain whether the current behavior tree has any syntax errors or other problems, it may be debugged before step 103, wherein the debugging process, similar to the formal execution process, comprises performing the workflow corresponding to the current behavior tree according to the execution logic of the behavior tree, and feeding back intermediate and final results of the execution process to the running result feedback interface of the human-machine interaction interface for display. During the execution, statuses of each node are monitored, and corresponding prompts or handling is provided for any exceptions or errors encountered in the execution process.

In this embodiment, a user can perform debugging separately for each node and, according to the feedback execution results, check whether the inputs and outputs thereof are as expected, wherein, if they are not as expected, it is necessary to check and reconfigure the nodes. After single-node debugging has succeeded, a user can debug the workflow for the entire behavior tree, which means that the workflow will clear runtime data and be executed from the root node. If the workflow is executed with expected results, then step 103 may be performed to deploy the application of the AI model to the target device. In addition, in some applications, it is also possible to debug the behavior tree before adding the action node of application deployer, and, after the debugging has succeeded, add the application deployer and configure the corresponding target device.

In some implementations, for the same application scenario, such as deploying the same type of AI model to the same type of target device and implementing the same type of AI application, in order to avoid wasting manpower, time, etc. in repeatedly constructing behavior trees, the current behavior tree that the user has constructed completely may be saved as a behavior tree instance. When an identical behavior tree needs to be constructed again, it may be constructed by simply calling the behavior tree instance.

In addition, in order to make it more convenient to construct a behavior tree, when a user creates a behavior tree, nodes are recommended, error checks are performed, and node properties are intelligently mapped for the user, so that a behavior tree instance is further converted into a knowledge graph instance for storage. Correspondingly, as shown in Fig. 1B, it further comprises the following step:

Step 104, based on the syntax of a knowledge graph, constructing the current behavior tree into a knowledge graph instance for storage. The knowledge graph instance comprises nodes representing individual nodes in the behavior tree, and a plurality of sides representing relationships among the nodes or node properties.

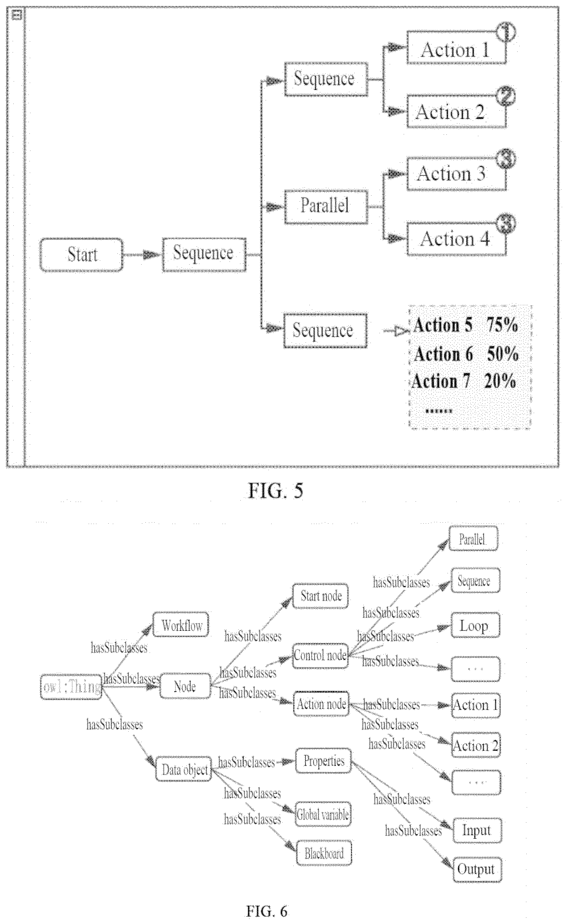

Correspondingly, when a user creates a behavior tree, it is possible to, based on stored historical knowledge graph instances, recommend control nodes and/or action nodes, perform error checks, and intelligently map node properties for the user. In this embodiment, the above functions are achievable by methods such as similarity calculation and comparison, and deep learning. Fig. 5 is a schematic diagram of node recommendation when a user constructs a behavior tree. As indicated by the gray dashed box in Fig. 5, when an action node is to be created for a sequence node, the system recommends actions 5, 6, and 7, and matching degrees of 75%, 50%, and 20% are provided, respectively, for selection by the user.

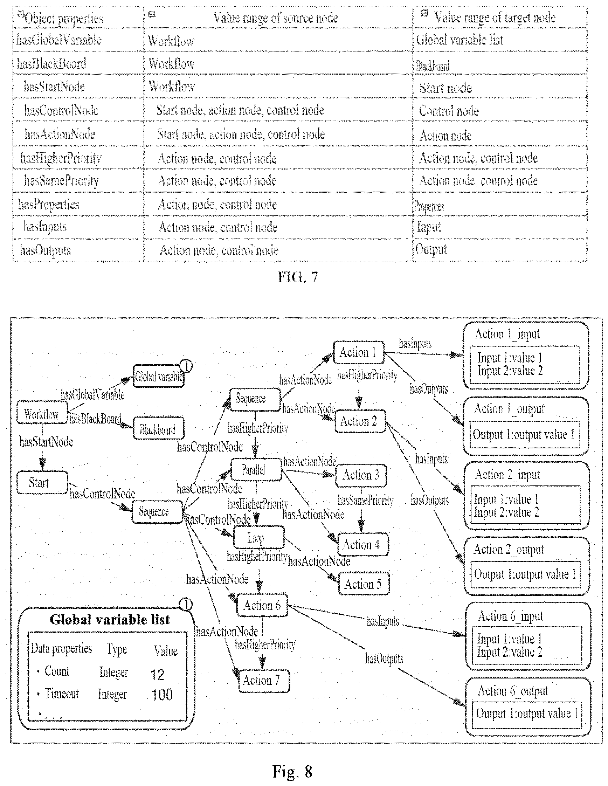

In this embodiment, the syntax of a knowledge graph may be as shown in Fig. 6 and Fig. 7.

Fig. 6 shows the definitions and hierarchical relationships of classes in a knowledge graph in this embodiment. As shown in Fig. 6, there are three subclasses, namely workflow, node, and data object, under the class "owl:Thing".

The node class corresponds to the nodes of a behavior tree, and has three subclasses: StartNode, ControlNode, and ActionNode. Specific logical node types, such as sequence, parallel, selector, loop, and count, are subclasses of ControlNode, while specific action node types, such as model trainer and model converter, are subclasses of ActionNode.

The workflow class corresponds to the workflow of a behavior tree.

Data objects are base classes of node property, global variable list, and blackboard. The node property class has subclasses such as input and output. The blackboard is used for recording a node instance list.

Fig. 7 is a schematic diagram of the object properties and data properties in a knowledge graph in this embodiment. As shown in Fig. 7, in the graph,
- "hasGlobalVariable (hasGVL)" is used to create a relationship between a workflow and a global variable list, which is used by a workflow instance to find the global variable list that belongs thereto.
- "hasBlackBoard" is used to create a relationship between a workflow and a blackboard, used for a workflow instance to find the blackboard that belongs thereto, thereby finding the node instance list that belongs thereto.
- "hasStartNode" is used to create a relationship between a workflow and the start node, which is used for a workflow instance to search for a start node instance, allowing the workflow instance to search for all the node instances in the workflow.

- "hasControlNode" is used to create a relationship between a node and a control node.
- "hasActionNode" is used to create a relationship between a node and an action node.
- "hasHigherPriority" is used to create a sequential relationship between nodes under the same parent node to represent the priority order. For example, in Fig. 2, A1 and A2 are under the sequence node, and A1 will be executed before A2, so there should be the relationship "A1 hasHigherPriority A2" in the knowledge graph.
- "hasSamePriority" creates a parallel relationship between nodes under the same parent node. For example, in Fig. 2, A3 and A4, being under the parallel node, will be executed simultaneously, so there should be the relationship "A3 hasSamePriority A4" in the knowledge graph.
- "hasProperties" is used for action nodes and control nodes to represent properties, whose scope should be the properties class.
- "hasInputs" is used for action nodes and control nodes to represent inputs, whose scope should be the inputs class.
- "hasOutputs" is used for action nodes and control nodes to represent outputs, whose scope should be the outputs class.

For example, for the behavior tree instance shown in Fig. 2, a knowledge graph instance as shown in Fig. 8 may be obtained.

In addition, in embodiments of the present invention, services such as logging, error handling, user management, and project management are further provided.

A device deployment method for an AI model in an embodiment of the present invention has been described in detail above, and a detailed description of a device deployment system for an AI model in an embodiment of the present invention will be provided below. A device deployment system for an AI model in an embodiment of the present invention may be used to implement a device deployment method for an AI model in an embodiment of the present invention. For details not disclosed in detail in the system embodiment of the present invention, reference may be made to the corresponding description in the method embodiment of the present invention, which will not be described in detail again herein.

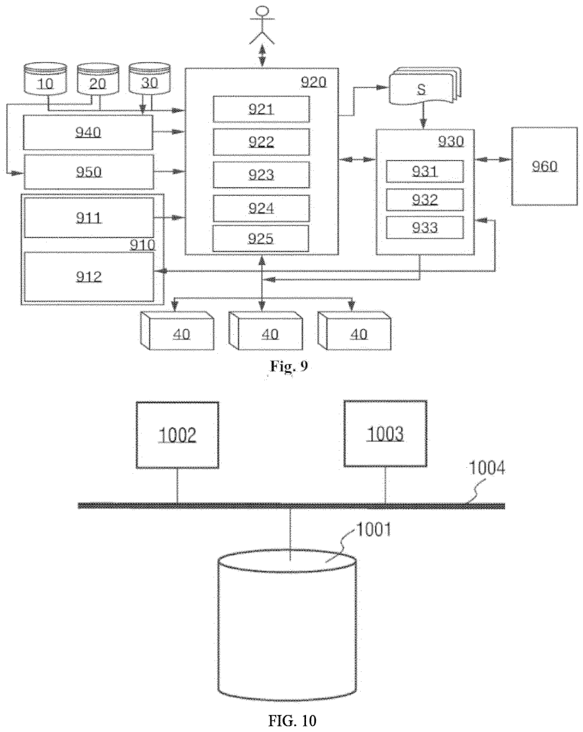

Fig. 9 is an exemplary structural diagram of a device deployment system for an AI model in an embodiment of the present invention. As shown in Fig. 9, the system can interact with a plurality of external databases, for example, an AI model library 10 for storing and managing pretrained AI models, a dataset library 20 for storing datasets for retraining AI models, and a knowledge graph library 30 for storing knowledge graph instances of historical behavior trees. As shown in Fig. 9, the system may comprise a node storage module 910, an engineering editing module 920, a behavior tree engine 930, a knowledge graph module 940, and a task template library 950.

The node storage module 910 is provided with nodes for constructing various behavior trees, the nodes comprising a start node, a control node, and an action node, wherein a behavior tree is used for representing a workflow, the control node is used for implementing logic control in the workflow, the action node is used for implementing a service operation in the workflow, and the action node comprises a reusable independent action node formed by encapsulating the related service operation in an AI model deployment process, for example, a model importer, model trainer, model converter, model adapter, or application deployer.

In a specific implementation, each action node may be composed of an interface part and an implementation part; for the implementation part, each action node is a containerized application; for the interface part, each action node is a graphical element that may be dragged and dropped and connected, and whose properties may be configured on the human-machine interaction interface of the engineering editing module; when each node is executed, the input in the property configuration of the interface part of the action node will be read and transmitted to the implementation part of the action node, and, after completion of the corresponding operation in the implementation part, the operation result will be converted into the output in the property configuration of the interface part of the action node. Correspondingly, the node storage module 910 in this embodiment may comprise an interface storage library 911 and a node service module 912. The interface storage library 911 is used for storing the interface parts of each action node, as well as the start node and control nodes. The node service module 912 is used for storing the implementation parts of each action node.

In addition, as shown in Fig. 9, in this embodiment, a public service module 960 may be further included, for storing applications for providing services such as logging, error handling, user management, and project management.

The engineering editing module 920 is used for providing a human-machine interaction interface for a user to construct and configure a behavior tree based on the nodes in the node storage module, and, according to the construction and configuration operations by the user, generating a current behavior tree for deploying the current AI model. In specific implementation, the current behavior tree may be stored in XML format or in a format of a scripting language, for example, Python. Specific configuration may be determined according to actual needs, which is not limited herein.

In one embodiment, the engineering editing module 920 may comprise a behavior tree editor 921, a node configurator 922, a variable configurator 923, a data blackboard 924, and a run/debug monitor 925.

The behavior tree editor 921 is used for providing human-machine interaction for a user to construct and edit the composition and connection relationships of the current behavior tree.

The node configurator 922 is used for providing human-machine interaction for a user to configure the properties of each node.

The variable configurator 923 is used for providing human-machine interaction for a user to configure global variables.

The data blackboard 924 is used for converting each node added to the current behavior tree into a node instance and adding same to a node instance list for storage or viewing, the node instance list presenting all the nodes in the current behavior tree in the form of a list or tree.

The run/debug monitor 925 is used for sending a debug or run instruction to the behavior tree engine 930, receiving and presenting intermediate and final execution results fed back by the behavior tree engine 930.

The behavior tree engine 930 is used for performing the workflow corresponding to the current behavior tree according to the execution logic of the current behavior tree upon receiving a debug or run instruction, and, after a user specifies a target device, constructing the current AI model as an AI application and deploying same to the target device 40 specified by the user. At the same time, intermediate and final results obtained in the execution process are fed back to the run/debug monitor 925 of the engineering editing module 920 for display. In addition, statuses of each node are monitored during the execution period, and exceptions and errors encountered during the execution process are handled accordingly. Then, the deployed AI model may be used to monitor the operational status of the device.

In one embodiment, the behavior tree engine 930 may specifically comprise a behavior tree executor 931, a status monitor 932, and an error handler 933.

The behavior tree executor 931 executes the workflow corresponding to the current behavior tree according to the execution logic of the current behavior tree, and, after a user specifies a target device, constructs a predetermined current AI model as an AI application and deploys same to the target device specified by the user. Specifically, when a node in the current behavior tree is executed, the input in the property configuration of the interface part of the node is read and converted to the implementation part of the node; after completion of specific operations in the implementation part, the operation result is converted into the output of the interface part of the node and provided to the engineering editing module 920 for display.

The status monitor 932 is used for monitoring the statuses of each node during the execution of the current behavior tree by the behavior tree executor 931. For example, when running/debugging the current behavior tree, a user may add some nodes or self-defining data for monitoring.

The error handler 933 is used for handling exceptions and errors encountered during execution. For example, error properties, such as error ID and error message, may be set for each node so that detailed error information may be obtained through the error properties.

The knowledge graph module 940 is used for, based on the syntax of a knowledge graph, constructing the current behavior tree into a knowledge graph instance for storage; the knowledge graph instance comprises nodes representing individual nodes in the behavior tree, and a plurality of sides representing relationships among the nodes or node properties. The knowledge graph module 940 is further used for, when a user constructs the current behavior tree, recommending control nodes and/or action nodes, performing error checks, and intelligently mapping node properties for the user based on stored historical knowledge graph instances.

The task template library 950 is used for storing at least one behavior tree template that is constructed based on nodes in the node storage module; said at least one behavior tree template comprises at least one fixed behavior tree template corresponding to different AI application types or device types and/or a universal intelligent behavior tree template based on automatic machine learning.

Correspondingly, the engineering editing module 920 may further, in response to a query request made by a user for the task template library through the human-machine interaction interface, provide at least one behavior tree template to the user for selection, and, when determining that the user selects a fixed behavior tree template for an AI application type or a target device type, generate the current behavior tree according to the user's first configuration and adjustment or nonadjustment of the fixed behavior tree template; the first configuration comprises determining the current AI model and the target device to which it needs to be deployed; when determining that the user selects the intelligent behavior tree template, generating the current behavior tree according to the user's second configuration of the fixed behavior tree template; the second configuration comprises determining the current AI application type and the target device to be deployed; the intelligent behavior tree template can automatically select a suitable current AI model from an AI model library according to the AI application type configured by the user.

In practical applications, a device deployment system for an AI model may also comprise only some of the modules mentioned above. For example, in one embodiment, a device deployment system for an AI model may comprise only the node storage module 910, engineering editing module 920, and behavior tree engine 930 described above; alternatively, it may comprise only the node storage module 910, engineering editing module 920, behavior tree engine 930, and knowledge graph module 940 described above; alternatively, it may comprise only the node storage module 910, engineering editing module 920, behavior tree engine 930, and task template library 950 described above. No limitations are placed thereon.

Fig. 10 is a schematic diagram of a device deployment system for another AI model in an embodiment of the present application, the system being applicable to implementing the method shown in Fig. 1 or the system shown in Fig. 9. As shown in Fig. 10, the system may comprise at least one memory 1001, at least one processor 1002, and at least one display 1003. In addition, it may further comprise some other components, for example, a communication port. These components communicate with one another through a bus 1004.

At least one memory 1001 is used for storing a computer program. In one embodiment, the computer program may be understood as comprising various modules of the device deployment system for an AI model shown in Fig. 9. In addition, at least one memory 1001 may further store operating systems, etc. Operating systems include, but are not limited to, Android operating system, Symbian operating system, Windows operating system, and Linux operating system.

At least one processor 1002 is used for calling a computer program stored in at least one memory 1001 and executing a device deployment method for an AI model described in an embodiment of the present application. The processor 1002 may be a CPU, processing unit/module, ASIC, logic module, or programmable gate array. It can receive and send data through the communication port.

At least one display 1003 is used for displaying a human-machine interaction interface.

Specifically, at least one processor 1002 is used for calling a computer program stored in at least one memory 1001 to enable the system to perform operations in a device deployment method for an AI model in any of the above embodiments.

It should be noted that not all the steps or modules in the above-described flows and structural diagrams are required, and that certain steps or modules may be omitted as needed. The sequence of performing steps is not fixed and may be adjusted as needed. The division of modules is only intended for ease of description of the functional division adopted, and, in actual implementation, a module may be implemented by a plurality of modules, while functions of a plurality of modules may also be implemented by the same module, these modules being located in the same device or in different devices.

It is understandable that the hardware modules in the above-described embodiments may be implemented mechanically or electronically. For example, a hardware module may comprise a specially designed permanent circuit or logic element, for example, a special processor, an FPGA, or an ASIC, for completing specific operations. A hardware module may further comprise programmable logic or circuitry (for example, a general-purpose processor or any other programmable processor) that is temporarily configured by software to perform specific operations. Whether to implement a hardware module specifically in a mechanical manner or by using a circuit temporarily configured (for example, being configured by software) may be determined based on cost and time considerations.

In addition, an embodiment of the present application further provides a computer-readable storage medium storing a computer program thereon, the computer program being capable of, when executed by a processor, implementing a device deployment method for an AI model described in an embodiment of the present application. Specifically, a system or device equipped with a storage medium may be provided, the storage medium storing software program code for implementing the functions of any of the above-described embodiments, and a computer (for example, a CPU or MPU) of the system or device is caused to read and execute the program code stored on the storage medium. In addition, by an instruction based on program code, an operating system, etc. operating on a computer may also be caused to complete part or all of the actual operations. It is also possible that functions of any one of the above-described embodiments may be implemented by writing program code read from a storage medium to a memory disposed in an expansion board inserted into a computer or to a memory disposed in an expansion unit connected to a computer, and then by, according to an instruction of program code, causing a CPU, etc. installed on the expansion board or expansion unit to execute part of all of actual operations. Examples of a storage medium for providing program code include floppy disk, hard disk, magneto-optical disk, optical disk (for example, CD-ROM, CD-R, CD-RW, DVD-ROM, DVD-RAM, DVD-RW, or DVD+RW), magnetic tape, non-volatile memory card, and ROM. Optionally, program code may be downloaded from a server computer via a communications network.

It is thus clear from the above-described solution that in an embodiment of the present invention, the deployment operation process of an AI model is represented by a behavior tree graph, which means that related operations in an AI model deployment process are encapsulated into independent nodes to make the nodes reusable and decouple specific services from the engineering platform, and then nodes are organized in the form of a behavior tree to generate an intuitive AI application operation process from development to actual deployment, thus reducing the device deployment complexity of an AI model.

In addition, various behavior tree instances are represented and saved in the form of knowledge graphs, and, on the basis thereof, recommendation functions for nodes, properties, or workflows are implemented, thus further reducing the device deployment complexity of an AI model.

Further, by setting behavior tree templates for various AI application types and behavior tree templates integrated with automatic machine learning in a template task library, users can select, instead of creating from scratch, behavior trees corresponding to their tasks, greatly reducing the device deployment complexity of AI models.

The above embodiments are only preferred embodiments of the present invention, rather than being intended to limit the scope of the present invention, and any modifications, equivalent substitutions, improvements, etc. made without departing from the spirit or principle of the present invention shall fall within the scope of protection of the present invention.

## Claims

1. A device deployment method for an AI model, **characterized in that** the method comprises:
receiving a current behavior tree constructed and configured by a user based on preset nodes for constructing various behavior trees, the nodes comprising a start node, a control node, and an action node, wherein a behavior tree is used for representing a workflow, the control node is used for implementing logic control in the workflow, the action node is used for implementing a service operation in the workflow, and the action node comprises a reusable independent action node formed by encapsulating the related service operation in an AI model deployment process;
performing the workflow corresponding to the current behavior tree, constructing a predetermined current AI model as an AI application and deploying same to a target device specified by the user.

2. The device deployment method for an AI model as claimed in claim 1, **characterized in that** the current behavior tree is a behavior tree constructed by a user by adding, connecting, and configuring a start node, required control nodes, and required action nodes; or it is
a behavior tree obtained by selecting the corresponding fixed behavior tree template from a task template library as claimed in the required AI application type or target device type to be deployed, and performing a first configuration and adjustment or nonadjustment based on the fixed behavior tree template; the first configuration comprises determining the current AI model and the target device to which it needs to be deployed; or it is
a behavior tree obtained by selecting an intelligent behavior tree template based on automatic machine learning from a task template library, and performing a second configuration based on the intelligent behavior tree template; the second configuration comprises determining the AI application type and the target device to be deployed, and automatically determining, with the intelligent behavior tree template, an appropriate AI model from an AI model library as claimed in the AI application type.

3. The device deployment method for an AI model as claimed in claim 2, further comprising constructing the current behavior tree based on the syntax of a knowledge graph into a knowledge graph instance for storage; the knowledge graph instance comprises nodes representing individual nodes in the behavior tree, and a plurality of sides representing relationships among the nodes or node properties.

4. The device deployment method for an AI model as claimed in claim 3, further comprising, when a user constructs the current behavior tree, recommending control nodes and/or action nodes, performing error checks, and intelligently mapping node properties for the user based on stored historical knowledge graph instances.

5. The device deployment method for an AI model as claimed in any one of claims 1 to 4, **characterized in that** each node is composed of an interface part and an implementation part; for the implementation part, each node is a containerized application; for the interface part, each node is a graphical element that may be dragged and dropped and connected, and whose properties may be configured on a human-machine interaction interface;
when each node in the current behavior tree is executed, the input in the property configuration of the interface part of the node will be read and transmitted to the implementation part of the node, and, after completion of the corresponding operation in the implementation part, the operation result will be converted into the output in the property configuration of the interface part of the node.

6. The device deployment method for an AI model as claimed in any one of claims 1 to 4, **characterized in that** the method further comprises converting each node added to the current behavior tree into a node instance and adding same to a node instance list for storage or viewing, the node instance list presenting all the nodes in the current behavior tree in the form of a list or tree.

7. The device deployment method for an AI model as claimed in any one of claims 1 to 4, **characterized in that** action nodes in the current behavior tree include:
the following action nodes that are executed in sequence: model importer, model trainer, and application deployer; or they include:
the following action nodes that are executed in sequence: model importer, model trainer, model converter, and application deployer; or they include:
the following action nodes that are executed in sequence: model adapter, model trainer, and application deployer;
the model importer is used for importing a trained AI model from a model storage area;
the model trainer is used for retraining an imported training model with a new data source or training parameter;
the model converter is used for converting a trained model from a source format to a target format;
the model adapter is used for, based on automatic machine learning, automatically selecting a suitable AI model from a model library as claimed in the currently determined AI application type;
the application deployer is used for packaging an AI model into an AI application and deploying same to a specified target device.

8. A device deployment system for an AI model, **characterized in that** the system comprises:
a node storage module provided with nodes for constructing various behavior trees, the nodes comprising a start node, a control node, and an action node, wherein a behavior tree is used for representing a workflow, the control node is used for implementing logic control in the workflow, the action node is used for implementing a service operation in the workflow, and the action node comprises a reusable independent action node formed by encapsulating the related service operation in an AI model deployment process;
an engineering editing module for providing a human-machine interaction interface for a user to construct and configure a behavior tree based on the nodes in the node storage module, and for, as claimed in the construction and configuration operations by the user, generating a current behavior tree for deploying the current AI model;
a behavior tree engine for performing the workflow corresponding to the current behavior tree, constructing the current AI model as an AI application and deploying same to a target device specified by the user.

9. The device deployment system for an AI model as claimed in claim 8, **characterized in that** the system further comprises: a knowledge graph module for constructing the current behavior tree based on the syntax of a knowledge graph into a knowledge graph instance for storage; the knowledge graph instance comprises nodes representing individual nodes in the behavior tree, and a plurality of sides representing relationships among the nodes or node properties.

10. The device deployment system for an AI model as claimed in claim 9, **characterized in that** the knowledge graph module is further used for, when a user constructs the current behavior tree, recommending control nodes and/or action nodes, performing error checks, and intelligently mapping node properties for the user based on stored historical knowledge graph instances.

11. The device deployment system for an AI model as claimed in claim 8, **characterized in that** the system further comprises:
a task template library for storing at least one behavior tree template that is constructed based on nodes in the node storage module; said at least one behavior tree template comprises at least one fixed behavior tree template corresponding to different AI application types or device types and/or a universal intelligent behavior tree template based on automatic machine learning;
the engineering editing module is further used for, in response to a query request made by a user for the task template library through the human-machine interaction interface, providing at least one behavior tree template to the user for selection; and, when determining that the user selects a fixed behavior tree template for an AI application type or a target device type, generating the current behavior tree as claimed in the user's first configuration and adjustment or nonadjustment of the fixed behavior tree template; the first configuration comprises determining the current AI model and the target device to which it needs to be deployed; when determining that the user selects the intelligent behavior tree template, generating the current behavior tree as claimed in the user's second configuration of the fixed behavior tree template; the second configuration comprises determining the current AI application type and the target device to be deployed; the intelligent behavior tree template can automatically select a suitable current AI model from an AI model library as claimed in the AI application type configured by the user.

12. The device deployment system for an AI model as claimed in any one of claims 8 to 11, **characterized in that** each node is composed of an interface part and an implementation part; for the implementation part, each node is a containerized application; for the interface part, each node is a graphical element that may be dragged and dropped and connected, and whose properties may be configured on the human-machine interaction interface of the engineering editing module;
when the behavior tree engine executes each action node in the current behavior tree, the input in the property configuration of the interface part of the node will be read and transmitted to the implementation part of the node, and, after completion of the corresponding operation in the implementation part, the operation result will be converted into the output in the property configuration of the interface part of the node;
the node storage module comprises an interface storage library and a node service module, wherein the interface storage library is used for storing the interface parts of each node; and the node service module is used for storing the implementation parts of each node.

13. The device deployment system for an AI model as claimed in any one of claims 8 to 11, **characterized in that** the engineering editing module comprises:
a behavior tree editor for providing human-machine interaction for a user to construct and edit the composition and connection relationships of the current behavior tree;
a node configurator for providing human-machine interaction for a user to configure the properties of each node;
a variable configurator for providing human-machine interaction for a user to configure a global variable;
a node instance list module for converting each node added to the current behavior tree into a node instance and adding same to a node instance list for storage or viewing, the node instance list presenting all the nodes in the current behavior tree in the form of a list or tree.

14. A device deployment system for an AI model, **characterized in that** the system comprises at least one memory and at least one processor, wherein
said at least one memory is used for storing a computer program;
said at least one processor is used for calling a computer program stored in said at least one memory to execute a device deployment method for an AI model as claimed in any one of claims 1 to 7.

15. A computer-readable storage medium storing a computer program thereon, **characterized in that** the computer program, when executed by a processor, implements the device deployment method for an AI model as claimed in any one of claims 1 to 7.
